# EUROPÄISCHE PATENTSCHRIFT

(11) **EP 3 385 598 B1**
(45) Veröffentlichungstag und Bekanntmachung des Hinweises auf die Patenterteilung: **11.06.2025**
(21) Anmeldenummer: 17164557.5
(22) Anmeldetag: 03.04.2017
(51) Int. Cl.: F17C 1/06, F17C 1/16, B29C 70/00

(54) **FASERVERSTÄRKTER DRUCKBEHÄLTER**
FIBRE-REINFORCED PRESSURE VESSEL
RÉCIPIENT SOUS PRESSION RENFORCÉ DE FIBRES

(43) Veröffentlichungstag der Anmeldung: 10.10.2018
(73) Patentinhaber: NPROXX B.V., 6422 RK Heerlen (NL)
(72) Erfinder: Sonnen, Michael, 47259 Duisburg (DE); Bäumer, Thomas, 41836 Hückelhoven (DE)
(74) Vertreter: Heuking Kühn Lüer Wojtek PartGmbB

(56) Entgegenhaltungen:
- DE-U1- 202016 100 754
- JP-A- 2005 106 142
- JP-A- 2009 174 554
- JP-A- 2014 080 999
- US-A1- 2011 220 661

## Beschreibung

### Technisches Gebiet der Erfindung

Die Erfindung bezieht sich auf einen faserverstärkten Druckbehälter mit einem sicher fixierten Faserende und auf ein entsprechendes Verfahren.

### Stand der Technik

Der Markt für Druckbehälter, die mit Faserverbundmaterial verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Automobilsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Für den Transport der Druckbehälter sind leichte Druckbehälter gewünscht, weil ein Transport von Druckbehältern mit hohen Behältergewichten unnötig viel Energie verbraucht und daher zu hohe Transportkosen verursacht.

Gegenwärtig benutzte zylinderförmige Druckbehälter besitzen eine Verstärkungsschicht aus Faserverbundmaterial aus Fasern eingebettet in einem Matrixmaterial, die als Außenschicht mittels eines Wickelverfahrens auf einen Innenbehälter (der sogenannte Liner) des Druckbehälters, der als Wickelkern fungiert, aufgewickelt wird. Ein Wickelverfahren ist für die zeit- und kostengünstige Herstellung von Faserverbundschichten der bevorzugte Prozess (beispielsweise im Gegensatz zur Verwendung von vorimprägnierten Faserabschnitte, sogenannten Prepregs). Während der Innenbehälter beispielsweise die Gasdichtigkeit des Druckbehälters garantiert, verleiht die Verstärkungsschicht aus Faserverbundmaterial dem Druckbehälter die notwendige mechanische Stabilität. Bei den Druckbehältern des Typs 3 wird ein mechanischer Innenbehälter (metallischer Liner) z.B. aus Aluminium oder Stahl eingesetzt, bei Druckbehältern des Typs 4 ist der Innenbehälter (Liner) aus Kunststoff. Die Außenschicht umfasst dabei sowohl Umfangslagen als auch sogenannte Helixlagen, um eine Druckfestigkeit in radialer und axialer Richtung bereitzustellen. In den Umfangslagen besitzen die Fasern eine tangentiale Faserrichtung, um eine Druckfestigkeit in Umfangsrichtung im zylindrischen Teil des Druckbehälters bereitzustellen. Als letzte Lage einer solchen Außenschicht wird z.B. eine Umfangslage auf den zylindrischen Bereich des Druckbehälters gewickelt, da diese zur Abdeckung von eventuell darunter befindlichen Helixlagen mit kleinen Faserwinkeln, die auch die Polkappen überdecken, dient und dem Druckbehälter damit dort seine endgültige Stabilität verleiht. Somit endet das Wickelverfahren auf dem Umfang des zylindrischen Bereichs, wo die Endlosfaser nach Fertigstellung der Außenschicht gekappt wird. Für die nachfolgende Aushärtung in einem entsprechenden Ofen wird das lose Faserende typischerweise mit einem Tape fixiert, was zur späteren mechanisches Stabilität der Außenschicht aus Faserverbundmaterial aber nicht beiträgt. US 2015/0165703 A1 offenbart eine alternative Methode, das Faserende innerhalb des Faserverbundes zu fixieren, indem eine Schlinge mit Schlaufe temporär in den gewickelten Faserverbund eingelegt und mit der letzten Faserlage überwickelt wird. Das abgeschnittene Faserende wird dann durch die aus dem Faserverbund herausragende Schlaufe hindurch gefädelt und die Schling mit dem eingefädelten Faserende seitlich auf dem Faserverbund herausgezogen. Herbei rutsch das Faserende nach einem gewissen Weg aus der Schlaufe heraus, ist dabei aber ein Teil in den Faserverbund hineingezogen worden und somit von der letzten Lage des Fasermaterials abgedeckt. Dadurch kann die vorab beschrieben Fixierung des Faserendes mit einem Tape für das nachfolgende Aushärten unter Drehung der Außenschicht in einem Aushärteofen entfallen. Dokument JP 2009174554 offenbart auch ein faserverstärkter Druckbehälter aus dem Stand der Technik.

Dieses so entstandene Faserende stellt dennoch weiterhin eine kritische Stelle für die Druckfestigkeit des Druckbehälters dar. Bei Berstversuchen kann beobachtet werden, dass sich das auf dem Mittelteil des Behälters abgelegte Faserende aufgrund einer Behälterdehnung auch vor Erreichen des Berstdrucks von der Lage des Faserverbundmaterials löst und anfängt, sich ruckartig abzuwickeln. An dieser Stelle setzt dann zumeist auch das Bersten des Druckbehälters ein.

Es wäre daher wünschenswert, einen zeit- und kostengünstig hergestellten Druckbehälter mit faserverstärkter Außenschicht zur Verfügung zu haben, bei dem durch das Aufbringverfahren implizierte Schwachpunkte bei der Druckfestigkeit vermieden werden können.

### Zusammenfassung der Erfindung

Es ist eine Aufgabe der vorliegenden Erfindung, einen Druckbehälter mit faserverstärkter Außenschicht zur Verfügung zu stellen, der zeit- und kostengünstig hergestellt werden kann und der weniger durch das Aufbringverfahren implizierte Schwachpunkte für die Druckfestigkeit besitzt.

Diese Aufgabe wird gelöst durch einen faserverstärkter Druckbehälter gemäss Anspruch 1.

Druckbehälter im Sinne der Erfindung sind alle geeigneten Behälter zur Speicherung von Fluiden oder Gasen mit einem gegenüber der Umgebung des Druckbehälters erhöhten Druck, die einen Innenbehälter aus Kunststoffmaterial oder Metall und eine Verstärkung aus Faserverbundmaterial umfassen. In der Regel sind diese Druckbehälter zylinderförmig mit nach außen gewölbten Abschlüssen auf beiden Seiten des zylinderförmigen Mittelteils. Diese Anschlüsse werden als Polkappen bezeichnet und dienen zum druckdichten Verschluss des Mittelteils. Die Innenseite der Polkappe ist dabei im späteren Druckbehälter Teil der zur Füllung (Fluid oder Gas) des Druckbehälters zugewandten Innenwand des Druckbehälters. Entsprechend ist die Außenseite die entgegengesetzte Seite der Polkappe. Zur Verstärkung des Druckbehälters wird diese Außenseite mit einer Außenschicht aus Faserverbundmaterial überwickelt, was gleichzeitig die Außenseite des Druckbehälters bilden kann. Der Innenbehälter kann mit verschiedenen Techniken hergestellt sein, beispielsweise mittels eines Schweißverfahrens, mittels Spritzguss oder als Blasformteil. Hierbei können die Polkappen auch nachträglich auf das Mittelteil aufgesetzt werden, beispielsweise mittels Verschweißen. Die separaten Polkappen können beispielsweise mittels Spritzguss hergestellt werden.

Druckbehälter mit einem Kunststoff-Innenbehälter besitzen einerseits ein sehr geringes Gewicht, was beispielsweise für Anwendungen in Transportmitteln wichtig ist, und andererseits können Füllungen wie beispielsweise Wasserstoff unter hohem Druck verlustarm gespeichert werden, da geeignete Kunststoffe eine hinreichend geringe Wasserstoffpermeabilität besitzen und die benötigte Festigkeit durch die Außenschicht aus Faserverbundmaterial bereitgestellt wird. Die Polkappen sind vorzugsweise kuppelartige Polkappen mit einer von einer Halbkugel abweichenden Form, die im Deckel-Randbereich angrenzend an den zylindrischen Mittelteil des Innenbehälters eine stärkere Krümmung gegenüber einer Halbkugeloberfläche ausgebildet sind, während der Zentralbereich der Polkappen eine geringere Krümmung gegenüber einer Halbkugeloberfläche aufweist. Mit dieser kuppelartigen Polkappe kann der Steifigkeits- und Lastsprung und das dadurch verursachte Spannungsverhältnis zwischen Umfangsrichtung (Mittelteil) und axialer Richtung (Polkappenflächen) durch axial auf der Polkappe im Zentralbereich angeordnete erste Fasern besonders gut aufgenommen werden. Eine solche besonders geeignete kuppelförmige Polkappe wird auch als Isotensoid bezeichnet.

Ein Faserverbundmaterial besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Hierbei sind die gewickelten Fasern bereits mit Matrixmaterial getränkt. Dadurch entsteht eine Faserschicht, auf die die Fasern in weiteren Faserschichten gewickelt werden, bis das Faserverbundmaterial die gewünschte Dicke besitzt und eine entsprechende Faserlage mit dieser Dicke darstellt. Die Außenschicht wird dabei in mehreren Lagen aus Faserverbundmaterial gewickelt, wobei unterschiedliche Lagen Fasern mit unterschiedlichen Faserwinkeln zur Zylinderachse des Druckbehälters aufweisen können. In einer Ausführungsform umfassen die Faserlagen aus ersten und/oder weiteren Fasern, beispielsweise zweiten Fasern, jeweils mehrere Lagen an Fasern. Durch den Verbund erhält das Faserverbundmaterial höherwertige Eigenschaften, wie beispielsweise eine höhere Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern und wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien können beispielsweise Duromere, Elastomere oder Thermoplaste verwendet werden. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Bei der Außenschicht werden ein Teil der Fasern in Umfangsrichtung (tangentiale Richtung auf dem Zylindermantel des Druckbehälters mit einem ersten Faserwinkel zur Zylinderachse), die Umfangslagen, zur Aufnahme von Umfangsspannungen sowie ein anderer Teil der Fasern, die Helixlagen, in axialer Richtung mit jeweiligen zweiten kleineren Faserwinkeln zur Zylinderachse zum zylindrischen Teils des Druckbehälters zur Aufnahme von axialen Spannungen, die auf die Deckelflächen des zylindrischen Druckbehälters wirken, gewickelt. Hierbei können unterschiedliche Helixlagen jeweils gleiche oder unterschiedliche mittlere zweite Faserwinkel pro Helixlage besitzen. In der Regel sind die mittleren zweiten Faserwinkel der unterschiedlichen Helixlagen unterschiedlich für die einzelnen Helixlagen. Die Fasern zur axialen Verstärkung der Deckelflächen verlaufen über die zylindrische Fläche des Druckbehälters mit Winkeln typischerweise kleiner 60 Grad, zum Teil nahezu 0 Grad, zur Zylinderachse des Druckbehälters. Die Umfangs- und Helixlagen der Außenschicht können dabei eine Abfolge angepasst an die jeweilige Anwendung haben. Der Begriff "mittlerer erster / zweiter Faserwinkel" bezeichnet eine über alle Wicklungen in der jeweiligen Lage gemittelte Faserrichtung relativ zur Zylinderachse, die einen entsprechenden Faserwinkel zwischen Faser und Zylinderachse aufspannt. Beispielsweise kann die erste Lage aus einer Umfangslage über den Mittelteil bestehen, abgedeckt beispielsweise von einer Helixlage über den gesamten Innenbehälter, wiederum überwickelt von einem Umfangslage über den Mittelteil und so weiter. Die Abfolge von Lagen kann aber auch mit einer Helixlage auf dem Innenbehälter starten, abgedeckt mit einer weiteren Helixlage oder einer Umfangslage und so weiter. Die Dicken der einzelnen Lagen können je nach Ausführungsform gleich oder unterschiedlich sein.

Die Belastung in der tragenden Außenschicht des Druckbehälters ist lokal unterschiedlich, wobei es Bereiche mit höherer Belastung und Bereiche mit niedrigerer Belastung, beispielsweise ein Ventilanschluss oder ein Zapfen auf einer der Polkappen, gibt.

Jede Außenschicht besitzt eine letzte gewickelte Lage, sei es eine Umfangslage oder eine Helixlage. Beide Lagen überdecken zumindest den Mittelteil des Druckbehälters. Am Ende des Wickelprozesses wird die Faser nach Fertigstellung der letzten Lage gekappt. Hierbei wird die Faser aus der letzten gewickelten Lage aus dem Mittelteil heraus auf einen Bereich des Druckbehälters geführt, der bei Druckbelastung höchstens eine vernachlässigbare Dehnung gegenüber dem Mittelteil zeigt. Zumindest das Faserende wird dann in diesem Bereich fixiert, da dieser Bereich mit seiner gegenüber den anderen Bereichen geringen Dehnung die wenigsten, vorzugsweise keine, Spannungen im Faserverbundmaterial um das Faserende herum erzeugt, sodass sich das Faserende nicht aus dem Faserverbund oder von einer anderen Unterlage, wo es fixiert ist, lösen kann. Somit bildet das Faserende keinen Schwachpunkt mehr bei der Druckfestigkeit der Außenschicht.

Hiermit wird ein Druckbehälter mit faserverstärkter Außenschicht zur Verfügung gestellt, der zeit- und kostengünstig hergestellt werden kann und der weniger durch das Aufbringverfahren implizierte Schwachpunkte bei der Druckfestigkeit besitzt, da der vorherige Schwachpunkt durch das Fadenendes wegfällt.

Der Bereich, der bei Druckbelastung höchstens eine vernachlässigbare Dehnung gegenüber dem Mittelteil zeigt, ist ein auf einer der Polkappen angeordneter Ventilanschluss oder ein auf einer der Polkappen angeordneter zentraler Zapfen. Der Zapfen dient während des Wickelprozesses zur Aufhängung des Innenbehälters auf der Zapfenseite. Dabei umfasst eine der Polkappen unabhängig vom Vorhandensein des Zapfens auf der anderen Polkappe einen Ventilanschluss. Dieser Zapfen kann aus Kunststoff oder Metall gefertigt sein. Dabei zeigt ein von außen auf den Innenbehälter des Druckbehälters aufgesetzter Zapfen keine druckbedingten Dehnungseffekte und kann daher aus einem beliebigen Material gefertigt sein. Vorzugsweise umfasst dabei der Ventilanschluss einen Ventilabschnitt, der aus Metall gefertigt ist. Der Ventilanschluss stellt einen Bereich mit nur geringer oder keiner Dehnung bei Druckbelastung des Druckbehälters dar, was insbesondere dann gilt, wenn der Ventilanschluss zumindest in einem Ventilabschnitt aus Metall als Material mit sehr geringer Dehnfähigkeit hergestellt ist.

Der letzte Abschnitt ist daher mit dem Faserende auf dem Ventilanschluss oder dem Zapfen, vorzugsweise auf dem Ventil abschnitt des Ventilabschlusses aus Metall, fixiert. In diesem Bereich besteht das geringste Risiko der Ablösung des Faserendes aufgrund von Druckbelastung en des Druckbehälters.

Der letzte Abschnitt der Faser zur Fixierung des Faserendes umläuft mehrfach den Ventilanschluss oder den Zapfen. Durch das mehrfache Umwickeln wird das später ausgehärtete Faserverbundmaterialinklusive des Faserendes besonders sicher fixiert.

In einer weiteren Ausführungsform bildet der letzte Abschnitt eine Fixierungslage an Faserverbundmaterial um den Ventilanschluss oder den Zapfen herum. Diese Fixierungslage bindet das Faserende gerade auf diesen sich nicht oder nur vernachlässigbar dehnenden Bereich zusätzlich ein und fixiert es besonders gut. Als Fixierungslage wird die Lage bezeichnet, die sich durch mehrfaches Umwickeln des Ventilanschlusses oder des Zapfens mit nebeneinander und/oder übereinander verlaufenden Umwicklungen des letzten Abschnitts der Faser mit Faserende bildet.

Alternativ, aber nicht von der Erfindung umfasst, ist zumindest das Faserende auf dem Ventilanschluss oder dem Zapfen mittels eines von außen auf das Faserende und den Ventilanschluss oder den Zapfen aufgesetzten Befestigungsmittels fixiert. Das Befestigungsmittel sichert damit von außen zusätzlich den Sitz der Faserendes und des letzten Abschnitts. Das Befestigungsmittel kann beispielsweise eine Klammer, ein Klipp oder ein dehnbarer beziehungsweise einschnappender Ring, gegebenenfalls mit Dehnlücke, sein.

Das Befestigungsmittel kann aus einem bis zu einer Temperatur entsprechend der Temperatur bei der Härtung des Druckbehälters temperaturstabilen Material bestehen und reversibel auf das Faserende zur Entfernung nach einem Aushärteschritt der Außenschicht aufgesetzt sein. Die anzuwendende Härtungstemperatur hängt vom jeweiligen Matrixmaterial ab und kann daher deutlich variieren. Der Fachmann ist in der Lage, für die jeweilige Härtungstemperatur geeignete Materialien für das Befestigungsmittel zu wählen. Damit kann das Befestigungsmittel stabil den Aushärteprozess durchlaufen, ohne dass es eine weitere Verbindung den überdeckten Fasern eingeht.

In einer weiteren Ausführungsform ist die letzte gewickelte Lage auf dem Mittelteil eine Umfangslage oder eine Helixlage, wobei die Helixlage mit einem zweiten Faserwinkel gewickelt ist, der dazu führt, dass die Fasern den Bereich des Druckbehälters mit vernachlässigbarer Dehnung tangieren oder nicht tangieren. Eine letzte äußere Umfangslage fixiert die sich darunter befindliche Abfolge von Lagen, insbesondere die Helixlagen, fest auf dem Innenbehälter und verleiht dem Druckbehälter zusätzliche tangentiale Stabilität. Beispielsweise kann die letzte Umfangslage deutlich dicker gewickelt sein als die vorherigen Lagen. Typische Dicken der Außenschicht liegen zwischen 0,2 und 5 mm, wobei diese auch von den Dimensionen des Behälters abhängen und daher die Dicke bei entsprechend großen Druckbehältern auch deutlich dicker sein kann. In einer anderen Ausführungsform ist dabei die letzte gewickelte Lage auf dem Mittelteil stattdessen eine Helixlage, die den Ventilanschluß nicht tangiert. In einer anderen Ausführungsform ist dabei die letzte gewickelte Lage auf dem Mittelteil eine Helixlage, die den Ventilanschluß tangiert.

In einer weiteren Ausführungsform ist der letzte Abschnitt der Faser mit dem Faserende auf einer nicht-geodätischen Bahn aus der letzten Lage herausgeführt, wobei die Änderung des Faserwinkels von dem ersten Faserwinkel in Richtung der Zylinderachse so langsam erfolgt, dass die adhäsive Wirkung des Faser- bzw. Matrixmaterials ausreicht, die Faser in ihrer nicht-geodätischen Bahn zu halten. Damit kann der letzte Abschnitt der Faser selbst aus einer Umfangslage ohne das Risiko des späteren Verrutschens in den Bereich der Polkappe bis zum Bereich mit vernachlässigbarer Dehnung geführt werden. Die Fasern in den einzelnen Lagen werden gewöhnlich entlang eines geodätischen Pfads verlegt, damit diese auf der Oberfläche des Druckbehälters nicht verrutschen können. Der geodätische Pfad entspricht der kürzesten Linie zwischen zwei Punkten auf einer gewölbten Oberfläche. Die Abweichung eines Faserverlaufs von dem geodätischen Pfad ermöglicht ein Verrutschen der Faser, da dieser zur direkten Verbindung zweier Punkte entlang des Faserverlaufs nicht die kürzeste Länge hat. Um dennoch ein Verrutschen zu unterbinden, erfolgt hier die Änderung des Faserverlaufs aus dem geodätischen Pfad heraus so langsam, dass das Matrixmaterial aufgrund seiner adhäsiven Wirkung die Faser auf dem gewickelten Weg ausreichend gegen ein Verrutschen fixiert.

Die Erfindung betrifft des Weiteren ein Verfahren gemäss Anspruch 5 zur Herstellung eines erfindungsgemäßen faserverstärkten Druckbehälters umfassend die Schritte wie in Anspruch 5 ausgeführt.

Die so hergestellte Außenschicht kann nun in einem Aushärteprozess ausgehärtet (vernetzt) werden. Der Fachmann ist in der Lage, die für die jeweilig verwendete Matrix geeigneten Prozessparameter für das Ausharten zu wählen und den Aushärteprozess durchzuführen. Üblicherweise wird der Druckbehälter dabei gedreht, damit die Matrix der anfänglich noch nicht vernetzten Außenschicht nicht verläuft und sich lokal ansammelt oder abtropft.

Der Bereich, der bei Druckbelastung höchstens eine vernachlässigbare Dehnung gegenüber dem Mittelteil zeigt, ist ein auf einer der Polkappen angeordneter Ventilanschluss oder ein auf einer der Polkappen angeordneter zentraler Zapfen, wobei das Fixieren zumindest mit dem Faserende auf dem Ventilanschluss durchgeführt wird. Auf den Ventilanschluss oder den Zapfen wirken keine oder nur geringfügige dehnenden Spannungen, sodass sich ein in diesem Bereich fixiertes Faserende auch bei druckbelasteten Druckbehältern nicht lösen wird. In einer Ausführungsform umfasst dabei der Ventilanschluss einen Ventilabschnitt, der aus Metall gefertigt ist, wobei das Fixieren auf dem Ventilabschnitt des Ventilabschlusses aus Metall durchgeführt wird. Ein Metallbauteil zeigt nur sehr geringe Dehnfähigkeiten, sodass ein in diesem Bereich fixiertes Faserende besonders sicher vor Ablösungen fixiert ist.

Das Verfahren umfasst den zusätzlichen Schritt des mehrfachen Umwickelns des letzten Abschnitts der Faser um den Ventilanschluss oder den Zapfen herum zur nachfolgenden Fixierung des Faserendes. Durch das mehrfache Umwickeln wird das später ausgehärtete Faserverbundmaterial besonders sicher fixiert. In einer Ausführungsform wird durch das Umwickeln eine Fixierungslage an Faserverbundmaterial um den Ventilanschluss oder den Zapfen herum gebildet, die das Faserende gerade auf diesen sich nicht oder nur vernachlässigbar dehnenden Bereich zusätzlich einbindet und besonders gut fixiert.

Das Verfahren kann den zusätzlichen Schritt des reversiblen Aufsetzens eines Befestigungsmittels von außen zumindest auf das Faserende auf dem Ventilanschluss oder den Zapfen umfassen. Das Befestigungsmittel sichert von außen zusätzlich den Sitz der Faserendes und des letzten Abschnitts. Das Befestigungsmittel kann aus einem temperaturstabilen Material sein. Damit durchläuft es stabil den Aushärteprozess, ohne dass es eine weitere Verbindung den überdeckten Fasern eingeht. Das Befestigungsmittel kann nach einem Aushärteschritt der Außenschicht wieder entfernt werden. Das Befestigungsmittel kann beispielsweise eine Klammer, ein Klipp oder ein dehnbarer beziehungsweise einschnappender Ring, gegebenenfalls mit Dehnlücke, sein.

In einer Ausführungsform des Verfahrens wird im Schritt des Herausführens des letzten Abschnitts der Faser umfassend das Faserende auf einer nicht-geodätischen Bahn aus der letzten Lage herausgeführt wird, wobei die Änderung des Faserwinkels von dem ersten Faserwinkel in Richtung der Zylinderachse so langsam erfolgt, dass eine adhäsive Wirkung des Matrixmaterial ausreicht, die Faser in ihrer nicht-geodätischen Bahn zu halten. Damit kann der letzte Abschnitt der Faser selbst aus einer Umfangslage als letzte Lage ohne das Risiko des späteren Verrutschens in den Bereich der Polkappe geführt werden.

### Kurze Beschreibung der Abbildungen

Diese und andere Aspekte der vorliegenden Erfindung sind im Detail in den Abbildungen wie folgt gezeigt.
- Fig.1:: eine Ausführungsform des erfindungsgemäßen Druckbehälters in perspektivischer Ansicht.
- Fig.2:: schematische Darstellung der Faserverläufe in unterschiedlichen Lagen mit (a) einer Umfangslage 31 und (b) einer Helixlage als letzte Lage auf dem erfindungsgemäßen Druckbehälter.
- Fig.3:: eine Ausführungsform des erfindungsgemäßen Druckbehälters im seitlichen Schnitt im Bereich des Ventilanschlusses mit Umwicklung durch den letzten Abschnitt der Faser mit Faserende.
- Fig.4:: eine weitere Ausführungsform des erfindungsgemäßen Druckbehälters im seitlichen Schnitt im Bereich des Ventilanschlusses mit einem Befestigungsmittel um das Faserende herum.
- Fig.5:: eine Ausführungsform des erfindungsgemäßen Verfahrens.

### Detaillierte Beschreibung von Ausführungsbeispielen

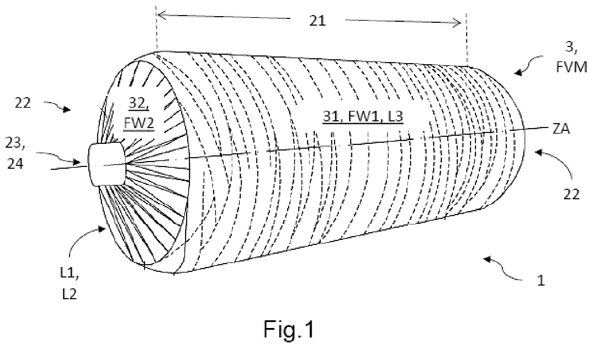

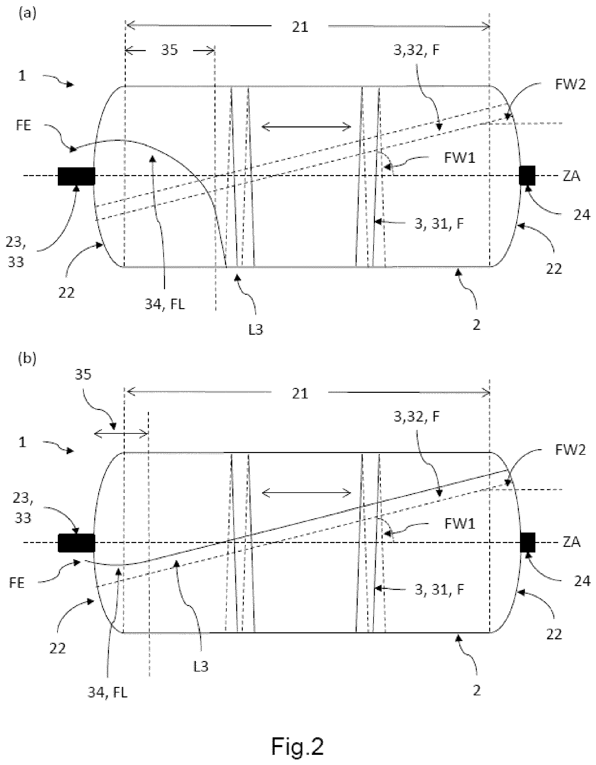

Fig. 1 zeigt eine Ausführungsform des erfindungsgemäßen Druckbehälters 1 in perspektivischer Ansicht umfassend einem Innenbehälter 2 (unter der Schicht 3, hier nicht sichtbar) mit einem zylindrischen Mittelteil 21 mit einer Zylinderachse ZA und zwei den zylindrischen Mittelteil 21 abschließenden Polkappen 22, und eine auf den Innenbehälter 2 zu dessen Verstärkung gewickelte Außenschicht 3 aus Faserverbundmaterial FVM aus mehreren übereinander angeordneten Lagen L1, L2, L3 an Fasern F eingebettet in einem Matrixmaterial. Die Außenschicht 3 kann die Lagen als eine beliebige Abfolge von ein oder mehreren Umfangslagen 31 (hier nur als äußere Lage L3 dargestellt) mit Fasern F mit einem mittleren ersten Faserwinkel FW1 von mehr als 80 Grad und von ein oder mehreren Helixlagen 32 (hier über den Polkappen 22 sichtbar) mit jeweiligen mittleren zweiten Faserwinkeln FW2 kleiner dem mittleren ersten Faserwinkel FW1 umfasst. In dieser Ausführungsform ist als letzte gewickelte Lage L3 auf dem Mittelteil 21 eine Umfangslage 31 gewickelt, die die sich darunter befindliche Helixlage L1, L2 bis in den Bereich der Polkappen 22 hinein überdeckt. Die hier auf der linken Seite sichtbare Polkappe 22 umfasst einen Ventilanschluss 23 zum Einlass beziehungsweise Auslass von Gas in/aus dem Druckbehälter hinein/hinaus. Alternativ kann diese Polkappe 22 auch einen Zapfen 24 zur Aufhängung des Innenbehälters 2 (hier nicht sichtbar) für den Wickelprozess umfassen. In diesem Fall wäre der Ventilanschluss 23 auf der anderen hier nicht sichtbaren Polkappe 22 angeordnet. Die Fasern F der Helixlage 32 scheinen in dieser Darstellung durch den Ventilanschluss 23 beziehungsweise den Zapfen 24 zu verlaufen. In Realität umlaufen die Fasern den Ventilanschluss 23 oder den Zapfen 24 seitlich und können diesen tangieren. Während der Druck bei einem gefüllten Druckbehälter sowohl in radialer Richtung (auf den Mittelteil 21) als auch in axialer Richtung entlang der Zylinderachse ZA (auf die Polkappen 22) wirkt und diese somit abhängig vom Innendruck mehr oder weniger stark dehnt, zeigt der Ventilanschluss 23 oder der Zapfen 24 selber eine vernachlässigbare Dehnung, beispielsweise gegenüber dem Mittelteil 21. Für die aus der letzten Lage L3 herausgeführte Faser F sei auf Fig.2 verwiesen.

Fig.2 zeigt eine schematische Darstellung der Faserverläufe in unterschiedlichen Lagen mit (a) einer Umfangslage 31 als letzte Lage und (b) einer Helixlage 32 als letzte Lage auf dem erfindungsgemäßen Druckbehälter 1, wo die Beschreibung von Fig.1 entsprechend ebenfalls gilt. Die Faserverläufe sind hier zur besseren Übersicht schematisch für Umfangslagen 31 und Helixlagen 32 um den hier sichtbar dargestellten Innenbehälter 2 dargestellt. In eine Umfangslage 31 verlaufen die Fasern F mit einem mittleren ersten Faserwinkel FW1 hier von ungefähr 85 Grad über den Mittelteil 21, der sich zwischen den beiden Polkappen 22 entlang der Zylinderachse ZA erstreckt. Durch die Festigkeit der Fasern wird der Mittelteil 21 bei diesem Faserverlauf in tangentialer Richtung verstärkt. Die Helixlage 32 erstreckt sich dagegen mit einem mittleren zweiten Faserwinkel FW2 zur Zylinderachse ZA, der deutlich kleiner als der mittlere erste Faserwinkel FW1 ist, über den Innenbehälter 2 des Druckbehälters 1, hier beispielsweise ungefähr 30 Grad. Hierbei ist die Faser F aus der letzten gewickelten Lage L3 aus dem Mittelteil 21 heraus in Richtung auf einen Bereich 33 des Druckbehälters 1 hin geführt, der bei Druckbelastung höchstens eine vernachlässigbare Dehnung gegenüber dem Mittelteil 21 zeigt. Dort wird zumindest das Faserende FE des herausgeführten letzten Abschnitts FL der Faser F fixiert. Hierbei ist in Fig.2a die letzte gewickelte Lage L3 auf dem Mittelteil 21 eine Umfangslage 31, während in Fig.2b die letzte gewickelte Lage L3 eine Helixlage 32 ist. Der letzte Abschnitt FL der Faser F mit dem Faserende FE (hier noch als loses Faserende FE vor dessen Fixierung gezeigt) wird in einem Übergangsbereich 35 auf dem Mittelteil 21 beziehungsweise über der Polkappe 22 auf einer nicht-geodätischen Bahn 34 aus der jeweils letzten Lage L3 herausgeführt, wobei die Änderung des Faserwinkels von dem ersten Faserwinkel FW1 beziehungsweise zweiten Faserwinkel FW2 in Richtung der Zylinderachse ZA so langsam erfolgt, dass die adhäsive Wirkung der getränkten Faser ausreicht, die Faser F in ihrer nicht-geodätischen Bahn 34 zu halten. Die Krümmung des Faserverlaufs im Übergangsbereich 35 ist in Fig.2 stark übertrieben dargestellt, um die Herausführung der Faser in Richtung des Ventilanschlusses 23 exemplarisch zu zeigen. Tatsächlich sind oftmals mehrere Umläufe über die Polkappen erforderlich, was die Darstellung deutlich kompliziert hätte. Hier endet die Herausführung der Faser F auf dem Ventilanschluss 23. Alternativ könnte die Herausführung der Faser F auch auf dem Zapfen 24 enden, wofür das voranstehende sinngemäß gleichermaßen gilt.

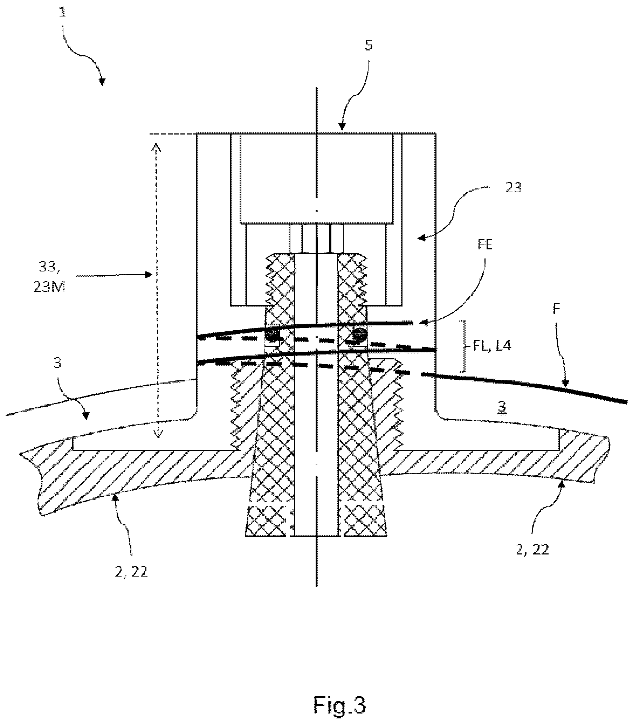

Fig.3 zeigt eine Ausführungsform des erfindungsgemäßen Druckbehälters 1 im seitlichen Schnitt im Bereich des Ventilanschlusses 23 der Polkappe 22 mit Umwicklung durch den letzten Abschnitt FL der Faser F mit Faserende FE. Im Ventilanschluss 23 ist ein Ventil 5 angeordnet. Der Ventilanschluss 23 weist eine vernachlässigbare Dehnung gegenüber dem Mittelteil 21 auf und ist somit der Bereich 33 des Druckbehälters 1 mit vernachlässigbarer Dehnung und damit bevorzugter Endpunkt der Faser F mit Faserende FE. In dieser Ausführungsform weist der Ventilanschluss 23 an der kompletten Außenseite einen Ventilabschnitt 23M auf, der aus Metall gefertigt ist. Um die geringe Dehnfähigkeit des Metalls für die Fixierung des Faserendes FE auszunutzen, ist hier der letzte Abschnitt FL mit dem Faserende FE auf dem Ventilabschnitt 23M des Ventilabschlusses 23 fixiert, indem der letzte Abschnitt FL der Faser F mehrfach den Ventilanschluss 23 umläuft und so eine Fixierungslage L4 an Faserverbundmaterial FVM um den Ventilanschluss 23 herum bildet, was hier aus Übersichtsgründen mit den fetten durchgezogenen und gestrichelten Linien nur angedeutet ist.

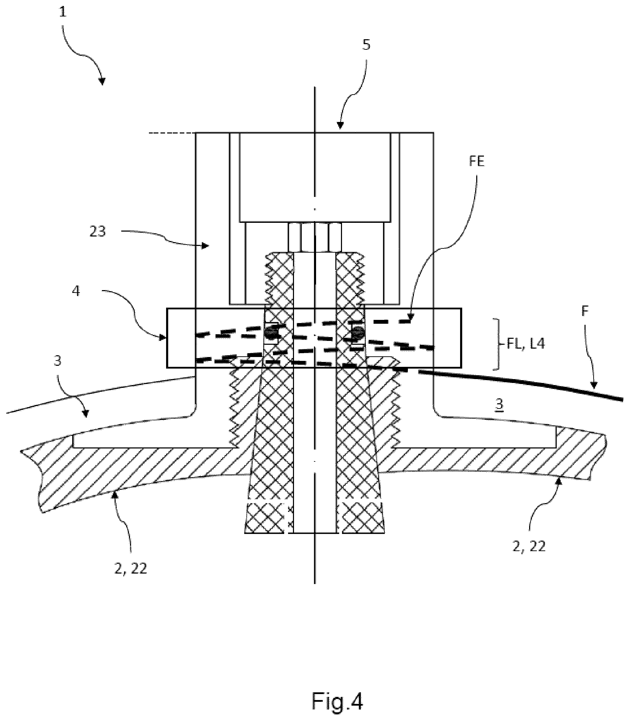

Fig.4 zeigt eine weitere Ausführungsform des erfindungsgemäßen Druckbehälters 1 im seitlichen Schnitt im Bereich des Ventilanschlusses 23 mit einem Befestigungsmittel 4 um das Faserende FE herum. Im Ventilanschluss 23 ist ein Ventil 5 angeordnet. Hier ist im Gegensatz zu Fig.3 das Faserende FE auf dem Ventilanschluss 23 zusätzlich mittels eines von außen auf das Faserende FE und den Ventilanschluss 23 aufgesetzten Befestigungsmittels 4 fixiert. Das Befestigungsmittel 4 kann beispielsweise ein Schnappring sein, der mittels Presssitz auf den Ventilanschluss 23 gehalten wird. In einer anderen Ausführungsform kann das Befestigungsmittel 4 aus einem dehnbaren Material gefertigt sein, das von oben über Ventil 5 und Ventilanschluss 23 bis hinunter zur Fixierung des Faserendes FE gestülpt wird. Sofern das Befestigungsmittel 4 aus einem temperaturstabilen Material besteht, kann es für den Aushärtevorgang auf dem Ventilanschluss 23 verbleiben und reversibel nach dem Aushärteschritt der Außenschicht 3 wieder entfernt werden. Reversibles Entfernen bezeichnet hier das rückstandslose Entfernen, ohne dass das Befestigungsmittel eine Verbindung mit der Unterlage eingeht.

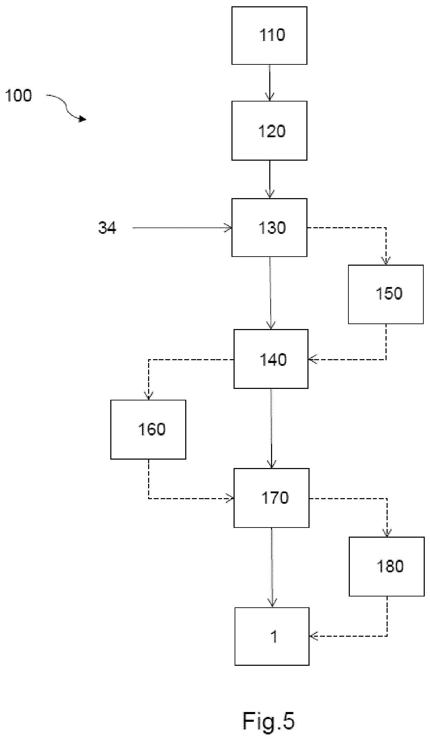

Fig.5 zeigt eine Ausführungsform des erfindungsgemäßen Verfahrens 100 zur Herstellung eines erfindungsgemäßen faserverstärkten Druckbehälters 1 umfassend die Schritte des Bereitstellens 110 eines Innenbehälters mit einem zylindrischen Mittelteil 21 mit einer Zylinderachse ZA und zwei den zylindrischen Mittelteil 21 abschließenden Polkappen 22, des Umwickelns 120 des Innenbehälters mit einem Faserverbundmaterial aus mehreren übereinander angeordneten Lagen an Fasern F eingebettet in einem Matrixmaterial zur Herstellung einer verstärkenden Außenschicht 3 des Druckbehälters 1, wobei die Außenschicht 3 die Lagen L1, L2, L3 als eine beliebige Abfolge von ein oder mehreren Umfangslagen 31 mit Fasern F mit einem mittleren ersten Faserwinkel FW1 von mehr als 80 Grad und von ein oder mehreren Helixlagen 32 mit jeweiligen mittleren zweiten Faserwinkeln FW2 kleiner dem mittleren ersten Faserwinkel FW1 umfasst, gefolgt vom Herausführen 130 der Faser aus einer letzten gewickelten Lage L3 aus dem Mittelteil 21 heraus auf einen Bereich 33 des Druckbehälters 1, der bei Druckbelastung höchstens eine vernachlässigbare Dehnung gegenüber dem Mittelteil 21 zeigt. Hierbei kann das Herausführen 130 des letzten Abschnitts FL der Faser F umfassend das Faserende FE auf einer nicht-geodätischen Bahn 34 aus der Umfangslage 31 heraus erfolgen, wobei die Änderung des Faserwinkels von dem ersten Faserwinkel FW1 in Richtung der Zylinderachse ZA so langsam erfolgt, dass eine adhäsive Wirkung des Matrixmaterial ausreicht, die Faser F in ihrer nicht-geodätischen Bahn 34 zu halten. Anschließend wird das Fixieren 140 eines letzten Abschnitts FL der Faser F zumindest mit einem Faserende FE in diesem Bereich durchgeführt. Bei einem Druckbehälter, wo der Bereich 33, der bei Druckbelastung höchstens eine vernachlässigbare Dehnung gegenüber dem Mittelteil 21 zeigt, ein auf einer der Polkappen 22 angeordneter Ventilanschluss 23 oder ein auf einer der Polkappen 22 angeordneter zentraler Zapfen 24 ist, wird das Fixieren 140 zumindest mit dem Faserende FE auf dem Ventilanschluss 23 oder den Zapfen 24 durchgeführt. Falls der Ventilanschluss 23 einen Ventilabschnitt 23M aus Metall umfasst, kann das Faserende vorzugsweise darauf fixiert werden. Vor dem Fixieren kann dabei ein mehrfaches Umwickeln 150 des letzten Abschnitt FL der Faser F um den Ventilanschluss 23 oder den Zapfen 24 herum erfolgen, vorzugsweise wird dabei durch das Umwickeln 150 eine Fixierungslage L4 an Faserverbundmaterial FVM um den Ventilanschluss 23 oder den Zapfen 24 herum gebildet. Danach kann ein reversibles Aufsetzens 160 eines Befestigungsmittels 4 von außen zumindest auf das Faserende FE auf dem Ventilanschluss 23 oder dem Zapfen 24 erfolgen. Die Außenschicht 3 kann nun in einem Aushärteprozess 170 ausgehärtet und damit in sich vernetzt werden, um eine belastbare Außenschicht 3 bereitzustellen. Sofern das Befestigungsmittel 4 aus einem temperaturstabilen Material besteht, kann dies nach dem Aushärteschritt 170 der Außenschicht 3 ohne Probleme wieder entfernt werden 180.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung erfasst.

### LISTE DER BEZUGSZEICHEN

- 1: erfindungsgemäßer Druckbehälter
- 2: Innenbehälter
- 21: zylindrischer Mittelteil des Innenbehälters
- 22: Polkappen auf dem zylindrischen Mittelteil
- 23: Ventilanschluss an zumindest einer der Polkappen
- 23M: Ventilabschnitt aus Metall
- 24: Zapfen
- 3: Außenschicht aus Faserverbundmaterial
- 31: Umfangslagen der Außenschicht
- 32: Helixlagen der Außenschicht
- 33: Bereich des Druckbehälters mit zumindest einer vernachlässigbaren Dehnung bei Druckbelastung
- 34: nicht-geodätische Bahn der Herausführung der Faser aus dem Mittelteil
- 35: Übergangsbereich des Faserwinkels auf dem Mittelteil abweichend vom mittleren ersten oder mittleren zweiten Faserwinkel
- 4: auf das Faserende auf den Ventilanschluss oder den Zapfen aufgesetzte Befestigungsmittel
- 5: Ventil

- 100: Verfahren zur Herstellung des erfindungsgemäßen Druckbehälters
- 110: Bereitstellen eines Innenbehälters des Druckbehälters
- 120: Umwickeln des Innenbehälters mit einem Faserverbundmaterial aus mehreren übereinander angeordneten Lagen
- 130: Herausführen der Faser aus einer letzten gewickelten Lage
- 140: Fixieren eines letzten Abschnitts der Faser mit einem Faserende
- 150: mehrfaches Umwickeln des letzten Abschnitts der Faser um den Ventilanschluss oder den Zapfen
- 160: reversibles Aufsetzen eines Befestigungsmittels von außen zumindest auf das Faserende
- 170: Aushärteschritt der Außenschicht
- 180: Entfernen des Befestigungsmittels nach dem Aushärteschritt
- F: Fasern des Faserverbundmaterials
- FE: Faserende am Ende des Wickelprozesses
- FL: letzter Abschnitt der Faser mit Faserende
- FVM: Faserverbundmaterial
- FW1: mittlerer erster Faserwinkel in der Umfangslage
- FW2: jeweiliger mittlerer zweiter Faserwinkel in den jeweiligen Helixlagen
- L1 - L3: unterschiedliche Lagen in der Außenschicht
- L4: Fixierungslage
- ZA: Zylinderachse des zylindrischen Mittelteils

## Patentansprüche

1. Ein faserverstärkter Druckbehälter (1) umfassend einem Innenbehälter (2) mit einem zylindrischen Mittelteil (21) mit einer Zylinderachse (ZA) und zwei den zylindrischen Mittelteil (21) abschließende Polkappen (22), und eine auf den Innenbehälter (2) zu dessen Verstärkung gewickelte Außenschicht (3) aus Faserverbundmaterial (FVM) aus mehreren übereinander angeordneten Lagen (L 1, L2, L3) an Fasern (F) eingebettet in einem Matrixmaterial, wobei die Außenschicht (3) die Lagen als eine beliebige Abfolge von ein oder mehreren Umfangslagen (31) mit Fasern (F) mit einem mittleren ersten Faserwinkel (FW1) von mehr als 80 Grad und von ein oder mehreren Helixlagen (32) mit jeweiligen mittleren zweiten Faserwinkeln (FW2) kleiner dem mittleren ersten Faserwinkel (FW1) umfasst, wobei
die Faser (F) aus der letzten gewickelten Lage (L3) aus dem Mittelteil (21) heraus auf einen Bereich (33) auf einer Polkappe (22) des Druckbehälters (1) geführt ist, wobei die Polkappen (22) bei Druckbelastung höchstens eine vernachlässigbare Dehnung gegenüber dem Mittelteil (21) zeigen und ein letzter Abschnitt (FL) der Faser (F) zumindest mit einem Faserende (FE) in diesem Bereich fixiert wird, wobei
der Bereich (33) ein auf einer der Polkappen (22) angeordneter Ventilanschluss (23) oder ein auf einer der Polkappen (22) angeordneter zentraler Zapfen (24) ist, **dadurch gekennzeichnet, dass**
der letzte Abschnitt (FL) mit dem Faserende (FE) auf dem Ventilanschluss (23) oder dem Zapfen (24), vorzugsweise auf dem Ventilabschnitt (23M) des Ventilabschlusses (23) aus Metall, fixiert ist, wobei der letzte Abschnitt (FL) der Faser (F) zur Fixierung des Faserendes (FE) mehrfach den Ventilanschluss (23) oder den Zapfen (24) umläuft.

2. Der Druckbehälter (1) nach Anspruch 1, **dadurch gekennzeichnet, dass** der der Bereich (33) ein auf einer der Polkappen (22) angeordneter Ventilanschluss (23) ist, wobei der Ventilanschluss (23) einen Ventilabschnitt (23M) umfasst, der aus Metall gefertigt ist.

3. Der Druckbehälter (1) nach Anspruch 1 oder 2, **dadurch gekennzeichnet, dass** der letzte Abschnitt (FL) eine Fixierungslage (L4) an Faserverbundmaterial (FVM) um den Ventilanschluss (23) oder den Zapfen (24) herum bildet.

4. Der Druckbehälter (1) nach einem der voranstehenden Ansprüche, **dadurch gekennzeichnet, dass** die letzte gewickelte Lage (L3) auf dem Mittelteil (21) eine Umfangslage (31) oder eine Helixlage (32) ist, wobei die Helixlage (32) mit einem zweiten Faserwinkel (FW2) gewickelt ist, der dazu führt, dass die Fasern (F) den Bereich (33) des Druckbehälters (1) tangieren oder nicht tangieren.

5. Ein Verfahren (100) zur Herstellung eines faserverstärkten Druckbehälters (1) nach Anspruch 1 umfassend die Schritte:
Bereitstellen (110) eines Innenbehälters mit einem zylindrischen Mittelteil (21) mit einer Zylinderachse (ZA) und zwei den zylindrischen Mittelteil (21) abschließenden Polkappen (22);
Umwickeln (120) des Innenbehälters mit einem Faserverbundmaterial aus mehreren übereinander angeordneten Lagen an Fasern (F) eingebettet in einem Matrixmaterial zur Herstellung einer verstärkenden Außenschicht (3) des Druckbehälters (1 ), wobei die Außenschicht (3) die Lagen (L 1, L2, L3) als eine beliebige Abfolge von ein oder mehreren Umfangslagen (31) mit Fasern (F) mit einem mittleren ersten Faserwinkel (FW1) von mehr als 80 Grad und von ein oder mehreren Helixlagen (32) mit jeweiligen mittleren zweiten Faserwinkeln (FW2) kleiner dem mittleren ersten Faserwinkel (FW1) umfasst;
Herausführen (130) der Faser aus einer letzten gewickelten Lage (L3) aus dem Mittelteil (21) heraus auf einen Bereich (33) auf einer Polkappe (22) des Druckbehälters (1 ), wobei die Polkappen (22) bei Druckbelastung höchstens eine vernachlässigbare Dehnung gegenüber dem Mittelteil (21) zeigen, und Fixieren (140) eines letzten Abschnitts (FL) der Faser (F) zumindest mit einem Faserende (FE) in diesem Bereich, wobei
der Bereich (33) ein auf einer der Polkappen (22) angeordneter Ventilanschluss (23) oder ein auf einer der Polkappen (22) angeordneter zentraler Zapfen (24) ist, wobei das Fixieren (140) zumindest mit dem Faserende (FE) auf dem Ventilanschluss (23) oder den Zapfen (24), vorzugsweise auf dem Ventilabschnitt (23M) des Ventilabschlusses (23) aus Metall, durchgeführt wird, wobei das Fixieren (140) durch das mehrfache Umwickeln (150) des letzten Abschnitt (FL) der Faser (F) um den Ventilanschluss (23) oder den Zapfen (24) herum erfolgt.

6. Das Verfahren nach Anspruch 5, wobei durch das Umwickeln (150) eine Fixierungslage (L4) an Faserverbundmaterial (FVM) um den Ventilanschluss (23) oder den Zapfen (24) herum gebildet wird.

7. Das Verfahren nach einem der Ansprüche 5 bis 6, wobei im Schritt des Herausführens (130) des letzten Abschnitts (FL) der Faser (F) umfassend das Faserende (FE) auf einer nicht-geodätischen Bahn (34) aus der letzten Lage (L3) herausgeführt wird, wobei die Änderung des Faserwinkels von dem ersten Faserwinkel (FW1) in Richtung der Zylinderachse (ZA) so langsam erfolgt, dass eine adhäsive Wirkung des Matrixmaterial ausreicht, die Faser (F) in ihrer nicht-geodätischen Bahn (34) zu halten.

## Claims

1. A fiber-reinforced pressure vessel (1) comprising an inner vessel (2) with a cylindrical central part (21) with a cylinder axis (ZA) and two pole caps (22) closing the cylindrical central part (21), and an outer layer (3) wound onto the inner vessel (2) for the reinforcement thereof, said outer layer (3) being made of fiber composite material (FVM) of several layers (L1, L2 and L3) of fibers (F) arranged one on top of the other embedded in a matrix material, wherein the layers of the outer layer (3) comprises any sequence of one or several circumferential layers (31) with fibers (F) with an average first fiber angle (FW1) of more than 80 degrees and of one or several helical layers (32) with respective average second fiber angles (FW2) smaller than the average first fiber angle (FW1), wherein
the fiber (F) from the last wound layer (L3) is guided out of the central part (21) to an area (33) on a pole cap (22) of the pressure vessel (1), wherein the pole caps (22), under compressive load, exhibit at most a negligible extension with respect to the central part (21), and a last section (FL) of the fiber (F) is fixed in said area at least with one fiber end (FE),
wherein
the area (33) is a valve connection (23) arranged on one of the pole caps (22) or a pin (24) arranged in the center one of the pole caps (22),
**characterized in that**
the last section (FL) is fixed with the fiber end (FE) to the valve connection (23) or the pin (24), preferably to the valve section (23M) of the valve connection (23) made of metal, wherein the last section (FL) of the fiber (F) runs several times around the valve connection (23) or the pin (24)for fixing of the fiber end (FE).

2. The pressure vessel (1) according to claim 1, **characterized in that** the area (33) is a valve connection (23) arranged on one of the pole caps (22), wherein the valve connection (23) comprises a valve section (23M), which is made of metal.

3. The pressure vessel (1) according to claim 1 or 2, **characterized in that** the last section (FL) forms a fixing layer (L4) of fiber composite material (FVM) around the valve connection (23) or the pin (24).

4. The pressure vessel (1) according to any one of the preceding claims, **characterized in that** the last wound layer (L3) on the central part (21) is a circumferential layer (31) or a helical layer (32), wherein the helical layer (32) is wound with a second fiber angle (FW2), which results in the fibers (F) touching or not touching the area (33) of the pressure vessel (1).

5. A method (100) for producing a fiber-reinforced pressure vessel (1) according to claim 1 comprising the steps of:
providing (110) an inner vessel with a cylindrical central part (21) with a cylinder axis (ZA) and two pole caps (22) closing the cylindrical central part (21);
wrapping (120) the inner vessel with a fiber composite material comprising of several layers of fibers (F) arranged one on top of the other embedded in a matrix material for the production of a reinforcing outer layer (3) of the pressure vessel (1), wherein the outer layer (3) comprises the layers (L1, L2, L3) as any sequence of one or several circumferential layers (31) with fibers (F) with an average first fiber angle (FW1) of more than 80 degrees and of one or several helical layers (32) with respective average second fiber angles (FW2) smaller than the average first fiber angle (FW1);
guiding (130) the fiber from a last wound layer (L3) out of the central part (21) to a area (33) on a pole cap (22) of the pressure vessel (1), wherein the pole caps (22), under compressive load, exhibit at most a negligible extension with respect to the central part (21), and
fixing (140) a last section (FL) of the fiber (F) in said area with at least one fiber end (FE), wherein
the area (33) is a valve connection (23) arranged on one of the pole caps (22) or a pin (24) arranged in the center of one of the pole caps (22),
wherein the fixing (140) is carried out with at least the fiber end (FE) on the valve connection (23) or the pin (24), preferably on the valve section (23M) of the valve connection (23) made of metal, wherein the fixing (140) takes place by repeatedly wrapping (150) the last section (FL) of the fiber (F) around the valve connection (23) or the pin (24).

6. The method according to claim 5, wherein a fixing layer (L4) of fiber composite material (FVM) is formed around the valve connection (23) or the pin (24) during the wrapping (150).

7. The method according to any one of claims 5 to 6, wherein the step of guiding (130) the last section (FL) of the fiber (F) comprising the fiber end (FE) out of the last layer (L3) takes place on a non-geodetic path (34), wherein the change of the fiber angle from the first fiber angle (FW1) in the direction of the cylinder axis (ZA) takes place so slowly that an adhesive effect of the matrix material is sufficient to hold the fiber (F) in its non-geodetic path (34).

## Revendications

1. Un récipient sous pression (1) renforcé de fibre, comprenant un récipient intérieur (2) avec une partie centrale cylindrique (21) ayant un axe cylindrique (ZA) et deux pôles (22) qui recouvrent la partie centrale cylindrique (21), et une couche extérieure (3) de matériau composite renforcé de fibre (FVM), enroulée sur le récipient intérieur (2) pour le renforcer et constituée de plusieurs couches superposées (L1, L2, L3) de fibres (F) noyées dans un matériau de matrice, la couche extérieure (3) comprenant les couches sous la forme d'une séquence arbitraire d'une ou plusieurs couches circonférentielles (31) de fibres (F) ayant un premier angle de fibre moyen (FW1), supérieur à 80 degrés, et d'une ou plusieurs couches hélicoïdales (32) ayant des deuxièmes angles de fibre moyens respectifs (FW2), inférieurs au premier angle de fibre moyen (FW1),
la fibre (F) de la dernière couche enroulée (L3) de la partie centrale (21) étant guidée sur une zone (33) sur un pôle (22) du récipient sous pression (1), les pôles (22) présentant au maximum un allongement négligeable par rapport à la partie centrale (21) lorsqu'ils sont soumis à une pression, et une dernière section (FL) de la fibre (F) étant fixée dans cette zone au moins avec une extrémité de la fibre (FE),
la zone (33) étant un raccord de valve (23) disposé sur l'un des pôles (22) ou un pivot central (24) disposé sur l'un des pôles (22),
**caractérisé en ce que**
la dernière section (FL) est fixée avec l'extrémité de la fibre (FE) sur le raccord de valve (23) ou sur le pivot (24), de préférence sur la section de valve (23M) de la terminaison de valve (23) en métal, la dernière section (FL) de la fibre (F) entourant plusieurs fois le raccord de valve (23) ou le pivot (24) pour la fixation de l'extrémité de la fibre (FE).

2. Le récipient sous pression (1) selon la revendication 1, **caractérisé en ce que** la zone (33) est un raccord de valve (23) disposé sur l'un des pôles (22), le raccord de valve (23) comprenant une section de valve (23M) qui est fabriquée en métal.

3. Le récipient sous pression (1) selon la revendication 1 ou 2, **caractérisé en ce que** la dernière section (FL) forme une couche de fixation (L4) de matériau composite renforcé de fibre (FVM) autour du raccord de valve (23) ou du pivot (24).

4. Le récipient sous pression (1) selon l'une des revendications précédentes, **caractérisé en ce que** la dernière couche enroulée (L3) sur la partie centrale (21) est une couche ciconférentielle (31) ou une couche hélicoïdale (32), la couche hélicoïdale (32) étant enroulée avec un deuxième angle de fibre (FW2) qui fait que les fibres (F) sont ou ne sont pas tangentes à la zone (33) du récipient sous pression (1).

5. Un procédé (100) de fabrication d'un récipient sous pression (1) renforcé de fibre selon la revendication 1, comprenant les étapes suivantes :
la mise à disposition (110) d'un récipient intérieur avec une partie centrale cylindrique (21) ayant un axe cylindrique (ZA) et deux pôles (22) qui recouvrent la partie centrale cylindrique (21) ;
l'enroulement (120) du récipient intérieur avec un matériau composite renforcé de fibre, constitué de plusieurs couches superposées de fibres (F) noyées dans un matériau de matrice pour produire une couche extérieure de renforcement (3) du récipient sous pression (1), la couche extérieure (3) comprenant les couches (L1, L2, L3) sous la forme d'une séquence arbitraire d'une ou plusieurs couches circonférentielles (31) avec des fibres (F) ayant un premier angle de fibre moyen (FW1), supérieur à 80 degrés, et d'une ou plusieurs couches hélicoïdales (32) ayant des deuxièmes angles de fibre moyens respectifs (FW2), inférieurs au premier angle de fibre moyen (FW1) ;
la sortie (130) de la fibre d'une dernière couche enroulée (L3) de la partie centrale (21) sur une zone (33) sur un pôle (22) du récipient sous pression (1), les pôles (22) présentant au maximum un allongement négligeable par rapport à la partie centrale (21) lorsqu'ils sont soumis à une pression, et
la fixation (140) d'une dernière section (FL) de la fibre (F) au moins avec une extrémité de la fibre (FE) dans cette zone,
la zone (33) étant un raccord de valve (23) disposé sur l'un des pôles (22) ou un pivot central (24) disposé sur l'un des pôles (22),
la fixation (140) étant effectuée au moins avec l'extrémité de la fibre (FE) sur le raccord de valve (23) ou sur le pivot (24), de préférence sur la section de valve (23M) de la terminaison de valve (23) en métal, la fixation (140) s'opérant par un enroulement multiple (150) de la dernière section (FL) de la fibre (F) autour du raccord de valve (23) ou du pivot (24).

6. Le procédé selon la revendication 5, dans lequel l'enroulement (150) forme une couche de fixation (L4) de matériau composite renforcé de fibre (FVM) autour du raccord de valve (23) ou du pivot (24).

7. Le procédé selon l'une des revendications 5 à 6, dans lequel, dans l'étape consistant à faire sortir (130) la dernière section (FL), la fibre (F) comprenant l'extrémité de la fibre (FE) est guidée hors de la dernière couche (L3) sur une trajectoire non géodésique (34), le changement de l'angle de fibre depuis le premier angle de fibre (FW1) dans la direction de l'axe cylindrique (ZA) étant suffisamment lent pour qu'une action adhésive du matériau de matrice soit suffisante pour maintenir la fibre (F) dans sa trajectoire non géodésique (34).
